# EUROPÄISCHE PATENTSCHRIFT

(11) **EP 3 031 113 B1**
(45) Veröffentlichungstag und Bekanntmachung des Hinweises auf die Patenterteilung: **12.09.2018**
(21) Anmeldenummer: 14739434.0
(22) Anmeldetag: 15.07.2014
(51) Int. Cl.: H02J 3/18, H02J 3/38

(54) **VERFAHREN ZUM STEUERN VON WINDENERGIEANLAGEN**
METHOD FOR CONTROLLING WIND POWER PLANTS
PROCÉDÉ DE COMMANDE D'ÉOLIENNES

(30) Priorität: 06.08.2013 DE 102013215398
(43) Veröffentlichungstag der Anmeldung: 15.06.2016
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2014/065138
(87) Internationale Veröffentlichungsnummer: WO 2015/018612

(56) Entgegenhaltungen:
- EP-A1- 2 381 094
- DE-A1-102010 006 142
- US-A1- 2007 273 155
- US-A1- 2012 032 443

## Beschreibung

Die vorliegende Erfindung betrifft ein Verfahren zum Einspeisen elektrischer Energie in ein elektrisches Versorgungsnetz mittels einer Windenergieanlage oder mittels eines Windparks. Weiterhin betrifft die vorliegende Erfindung eine Windenergieanlage zum Einspeisen elektrischer Energie in ein elektrisches Versorgungsnetz und die vorliegende Erfindung betrifft einen Windpark zum Einspeisen elektrischer Energie in ein elektrisches Versorgungsnetz.

Es ist allgemein bekannt, mit Windenergieanlagen oder mittels eines Windparks, der mehrere Windenergieanlagen umfasst, elektrische Energie in ein elektrisches Versorgungnetz einzuspeisen. Es ist hierzu auch bekannt, dass die Windenergieanlage bzw. der Windpark neben der reinen Einspeisung von Energie Aufgaben der Netzstützung wahrnimmt. Insoweit wird hier von einem allgemein üblichen elektrischen Versorgungsnetz als Wechselspannungsnetz ausgegangen.

Ein frühes Dokument, das Netzstützung mittels Windenergieanlagen beschreibt, ist bspw. das US Patent US 6,965,174. Dieses Dokument beschreibt u.a. die Einstellung des Phasenwinkels bei der Einspeisung mittels einer Windenergieanlage. Später wurden auch Verfahren für einen Windpark beschrieben, wie bspw. in dem Dokument US 7,638,893.

Solche Verfahren überwachen das Netz und reagieren ggf. auf Änderungen im Netz. Heutzutage nimmt der Anteil der Windenergie im Netz zumindest in einigen Staaten oder Regionen stark zu, so dass die Energieeinspeisung, und damit ggf. auch die Netzstabilität, zunehmend von vorherrschenden Windbedingungen abhängen kann. Diesem Problem kann durch Energiezwischenspeicherung begegnet werden. Allerdings können solche Zwischenspeicher kostspielig sein und sind häufig nicht oder nicht in ausreichendem Maße vorhanden.

Der vorliegenden Erfindung liegt somit die Aufgabe zugrunde, zumindest eines der genannten Probleme zu adressieren. Insbesondere soll eine Lösung vorgeschlagen werden, die eine noch weitere Verbesserung der Netzstützung durch Windenergieanlagen ermöglicht. Zumindest soll eine alternative Lösung vorgeschlagen werden.

Das Deutsche Patent- und Markenamt hat in der Prioritätsanmeldung zu vorliegender PCT-Anmeldung folgenden Stand der Technik recherchiert: DE 10 2010 006 142 A1, US 6 965 174 B2, US 7 638 893 B2 und US 2011 / 0 148 114 A1.

Erfindungsgemäß wird ein Verfahren gemäß Anspruch 1 vorgeschlagen.

Demnach wird elektrische Energie mittels einer Windenergieanlage oder eines Windparks in ein elektrisches Versorgungsnetz eingespeist. Die Windenergieanlage bzw. der Windpark wandeln hierbei kinetische Energie aus dem Wind in elektrische Energie um. Dabei wird berücksichtigt, dass der Wind eine veränderliche Windgeschwindigkeit aufweist.

Die Berücksichtigung der Windgeschwindigkeit legt hierbei bekannte Mittelwerte zugrunde, wie bspw. einen 10 Sekunden, 1 Minuten oder 10 Minuten-Mittelwert.

Weiterhin wird von einer Windenergieanlage bzw. einem Windpark ausgegangen, die zum Einspeisen von Wirkleistung P und zum Einspeisen von Blindleistung Q vorbereitet sind.

Hierfür wird nun vorgeschlagen, dass die Blindleistung in Abhängigkeit der Windgeschwindigkeit eingestellt wird. Diesem Vorschlag liegt die Erkenntnis zugrunde, dass besonders dann, wenn eingespeiste Windenergie in dem Netz oder Netzabschnitt dominant ist, Netzzustände von der Windgeschwindigkeit abhängen können, wie bspw. die Frequenz oder die Spannungsamplitude. Jedenfalls die Spannungsamplitude kann aber von der Windenergieanlage durch Einspeisung von Blindleistung beeinflusst werden und diese einzuspeisende Blindleistung hängt zumindest deutlich weniger von der Windgeschwindigkeit ab, als die einspeisbare Wirkleistung. Arbeitet die Windenergieanlage u.a. in einem sog. "STATCOM-Modus", kann sie sogar unabhängig der Windgeschwindigkeit Blindleistung einspeisen, also selbst bei Windstille.

Erfindungsgemäß wird somit vorgeschlagen, solchen Netzeinflüssen bereits vorzugreifen und daher Blindleistung in Abhängigkeit von der Windgeschwindigkeit einzuspeisen, um dadurch einer windgeschwindigkeitsabhängigen Einspeisung der Wirkleistung bzw. daraus resultierenden Effekten unmittelbar entgegen zu wirken.

Vorzugsweise wird die Blindleistung erhöht, wenn die Windgeschwindigkeit über eine Sturmanfangswindgeschwindigkeit steigt. Eine solche Sturmanfangswindgeschwindigkeit ist eine solche Windgeschwindigkeit, bei der die Windenergieanlage bzw. der Windpark zu ihrem bzw. seinem Schutz abgeregelt wird. Viele Windenergieanlagen werden bei einer solchen Sturmanfangsgeschwindigkeit sogar abgeschaltet.

Hier liegt die Erkenntnis zugrunde, dass gerade bei starkem Wind im Bereich von Sturmwindgeschwindigkeiten der Einfluss der Windgeschwindigkeit auf die Einspeisung in das elektrische Versorgungsnetz sehr groß sein kann. Damit kann auch der Einfluss auf Zustände in dem elektrischen Versorgungsnetz stärker sein, als bei niedrigen Windgeschwindigkeiten, bei denen die Anlage oder Anlagen im Teillastbereich fahren, also wegen schwachen Windes weniger als Nennleistung einspeisen. Hier liegt auch die Erkenntnis zugrunde, dass bei Sturmsituationen eine größere Schwankung der Windgeschwindigkeit vorliegen kann, als bei schwachen Winden. Entsprechend kann bei solchen Sturmsituationen auch eine größere Schwankung der Einspeiseleistung erwartet werden.

Besonders problematisch wird es dann, wenn die Windenergieanlage, oder der Windpark, oder benachbarte Windenergieanlagen oder Windparks beim Erreichen von Sturmwindgeschwindigkeiten abschalten oder zumindest in einen Betrieb ohne Wirkleistungseinspeisung wechseln. In diesem Fall besteht nämlich die Gefahr, dass sehr plötzlich sehr viel Einspeiseleistung wegfällt. Der Wegfall von eingespeister Wirkleistung führt zwar meist in erster Linie zu einem Frequenzabfall, insbesondere dann, wenn soviel Leistung wegfällt, dass ein Unterangebot im Netz besteht, aber auch ein Abfall der Spannung kann die Folge sein. Dem soll das Einspeisen der Blindleistung entgegenwirken. Durch diese Erhöhung der Blindleistung pro aktiv im eintretenden Sturmfall wird dem beschriebenen Effekt im Netz vorgegriffen.

Vorzugsweise wird oberhalb der Sturmanfangswindgeschwindigkeit die Blindleistung mit weiter steigender Windgeschwindigkeit weiter erhöht. Außerdem wird vorgeschlagen, was kombiniert werden kann, die Blindleistung mit fallender Windgeschwindigkeit zu verringern, solange die Windgeschwindigkeit noch oberhalb der Sturmanfangswindgeschwindigkeit ist. Besonders wenn sich die Wirkleistungseinspeisung entgegengesetzt zur Blindleistungseinspeisung verhält, kann hierdurch Effekten durch die sturmbedingte Änderungen der Wirkleistungseinspeisung bereits pro aktiv entgegengewirkt werden.

Vorzugsweise wird ein kontinuierlicher Verlauf der Blindleistungseinspeisung für den Sturmbereich vorgegeben. Ein solcher Sturmbereich ist hier derjenige, bei dem die Windgeschwindigkeit zwischen der Sturmanfangswindgeschwindigkeit und der Sturmendwindgeschwindigkeit liegt. Die Sturmendwindgeschwindigkeit ist diejenige, bei der eine Windenergieanlage bzw. der Windpark keine Wirkleistung mehr ins elektrische Versorgungsnetz einspeist, wobei hier von einem Verhalten der Windenergieanlagen bzw. des Windparks ausgegangen wird, das oberhalb der Sturmanfangswindgeschwindigkeit abregelt und nicht sofort abschaltet.

Für diesen Sturmbereich wird somit vorgeschlagen, die Blindleistung von der Sturmanfangswindgeschwindigkeit zur Sturmendwindgeschwindigkeit kontinuierlich zu erhöhen bzw. im umgekehrten Fall kontinuierlich zu verringern.

Insbesondere hat die Blindleistung dann bei der Sturmendwindgeschwindigkeit einen Maximalwert erreicht, den die Windenergieanlage bzw. der Windpark maximal als Blindleistung einspeisen kann. Dieser Maximalwert kann durch Einspeiseeinheiten wie Wechselrichter der Windenergieanlage bzw. der Windenergieanlagen des Windparks bestimmt sein und/oder durch leitungsquerschnittsbedingte Maximalströme.

Gemäß einer weiteren Ausführungsform wird vorgeschlagen, bei Windgeschwindigkeiten oberhalb der Sturmanfangswindgeschwindigkeit, insbesondere bei Windgeschwindigkeiten oberhalb einer mittleren Sturmwindgeschwindigkeit, die eingespeiste Blindleistung dem Betrage nach höher als die Nennleistung auszuwählen. Hierbei wird eine Nennwirkleistung der Windenergieanlage bzw. des Windparks zugrundegelegt, die ein charakteristisches Merkmal der Windenergieanlage bzw. des Windparks ist. Dabei ist die mittlere Sturmwindgeschwindigkeit eine Windgeschwindigkeit, die zwischen der Sturmanfangswindgeschwindigkeit und der Sturmendwindgeschwindigkeit liegt, z.B. nimmt sie einen arithmetischen Mittelwert dieser beiden Windgeschwindigkeiten an. Zumindest soll gemäß dieser Ausführungsform die Blindleistung dem Betrage nach höher als die Nennwirkleistung liegen, wenn die Sturmendwindgeschwindigkeit erreicht ist oder zumindest fast erreicht ist.

Es wird hier eine Windenergieanlage zugrundegelegt bzw. auch vorgeschlagen, die auf das Einspeisen eines Stromes dimensioniert ist, der größer als ein Einspeisestrom ist, der sich bei Einspeisung von Nennwirkleistung einstellt. Mit einer solchen Auslegung ist es möglich, selbst bei Einspeisung von Nennwirkleistung außerdem noch Blindleistung einzuspeisen. In diesem Fall wird eine Scheinleistung eingespeist, die oberhalb der Nennwirkleistung liegt. Dieser Ausführungsform liegt nun die Erkenntnis zugrunde, dass dann, wenn nur noch wenig oder gar keine Wirkleistung mehr eingespeist wird, die Dimensionierung der Windenergieanlage bzw. des Windparks zur Einspeisung von Blindleistung voll ausgenutzt werden kann. Dadurch kann Blindleistung mit einem höheren Betrag eingespeist werden, als mit der Anlage jemals Wirkleistung eingespeist werden sollte.

Vorzugsweise wird für den Windgeschwindigkeitsbereich zwischen der Sturmanfangswindgeschwindigkeit und der Sturmendwindgeschwindigkeit für die einzuspeisende Blindleistung eine Blindleistungsfunktion vorgegeben, die einen Zusammenhang zwischen der Blindleistung und der Windgeschwindigkeit definiert. Eine solche Blindleistungsfunktion wird vorzugsweise als eine Polynomfunktion erster oder zweiter Ordnung, also eine windgeschwindigkeitsabhängige Gerade oder Parabellfunktion, vorgegeben. Außerdem oder alternativ kann sie als Hysterese-Funktion vorgesehen sein, so dass die Funktion für ansteigenden Wind zumindest teilweise andere Blindleistungswerte zu denselben Windwerten definiert, wie bei abfallendem Wind. Eine Polynomfunktion als solche kann keine Hysterese-Funktion sein, aber die Hysterese-Funktion kann bspw. durch zwei Polynomfunktionen zweiter Ordnung unterschiedlicher Parametrierung definiert werden. Solche Funktionen werden vorzugsweise verwendet, es können aber auch anderen Funktionen zum Einsatz kommen, wie bspw. Polynom-Funktionen höherer Ordnung, trigonometrische Funktionen, wie z.B. Abschnitte einer Sinus-Funktion, oder auch Spline-Funktionen, die einen funktionalen Zusammenhang beschreiben, der über mehrere Stützstellen beschrieben wird.

Erfindungsgemäß wird zudem eine Windenergieanlage zum Einspeisen elektrischer Energie in ein elektrisches Versorgungsnetz vorgeschlagen, die dazu vorbereitet ist, ein Verfahren zumindest gemäß einer der beschriebenen Ausführungsformen durchzuführen.

Vorzugsweise weist diese Windenergieanlage einen Generator auf, der zum Erzeugen einer Generatornennleistung ausgelegt ist und sie weist eine Einspeisevorrichtung auf, die zum Durchführen des Einspeisens vorgesehen ist. Diese Einspeisevorrichtung ist zum Einspeisen eines maximalen Einspeisestroms ausgelegt und dieser maximale Einspeisestrom ist größer als ein Einspeisestrom zum Einspeisen der Generatornennleistung. Somit ist diese Windenergieanlage dazu vorbereitet, selbst bei Einspeisung der Generatornennleistung zusätzlich noch Blindleistung einzuspeisen.

Vorzugsweise weist die Windenergieanlage mehrere Einspeiseeinheiten auf, die insbesondere als Leistungsschränke ausgebildet sind. Die Anzahl der Einspeiseeinheiten, insbesondere wenn sie jeweils gleiche Größe aufweisen, bzw. die Anzahl der Leistungsschränke bestimmt die einspeisbare Leistung, insbesondere den einspeisbaren Strom. Je nach einzuspeisender Wirkleistung, die durch den Generator begrenzt ist, werden entsprechend viele Einspeiseeinheiten bzw. Leistungsschränke benötigt. Es wird nun vorgeschlagen, mehr Einspeiseeinheiten bzw. mehr Leistungsschränke vorzusehen, als zum Einspeisen dieser Generatornennleistung nötig ist. Insbesondere ist wenigstens eine weitere Einspeiseeinheit, insbesondere wenigstens zwei weitere Einspeiseeinheiten vorgesehen. Durch diese Verwendung von mehr Einspeiseeinheiten als notwendig, wird die beschriebene Mehreinspeisung von Blindleistung ermöglicht.

Erfindungsgemäß wird zudem ein Windpark vorgeschlagen, der mehrere Windenergieanlagen kombiniert. Ein Windpark zeichnet sich insoweit dadurch aus, dass die in ihm kombinierten Windenergieanlagen über denselben Netzanschlusspunkt in das elektrische Versorgungsnetz einspeisen bzw. das insoweit der Windpark über diesen Netzanschlusspunkt in das elektrische Versorgungsnetz einspeist. Auch dieser vorgeschlagene Windpark ist dazu vorbereitet, zum Einspeisen ein Verfahren gemäß einer der oben beschriebenen Ausführungsformen zu verwenden.

Vorzugsweise weist der Windpark eine Zentralsteuereinheit zum Steuern des Windparks auf und Verfahrensschritte zum Durchführen des Verfahrens zum Einspeisen sind auf dieser Zentralsteuereinheit implementiert. Insbesondere die Vorgabe der einzuspeisenden Blindleistung ist gemäß dieser Ausführungsform auf der Zentralsteuereinheit implementiert. Ggf. kann diese Zentralsteuereinheit weiter vorsehen, diese berechnete bzw. bestimmte Blindleistung als Blindleistungssollwerte, entweder absolut oder prozentual, an die einzelnen Windenergieanlagen des Windparks weiterzugeben.

Vorzugsweise ist der Windpark zum Einspeisen eines größeren Stroms ausgelegt, als derjenige Strom, der zum Einspeisen der maximalen Wirkleistung benötigt wird, auf die der Windpark ausgelegt ist. Insoweit wird auch hier eine größere Dimensionierung der Einspeiseeinheiten vorgeschlagen. Das kann auch für den Park dadurch erfolgen, dass entsprechend viele Einspeiseeinheiten vorgesehen werden.

Vorzugsweise sind einige oder alle der Windenergieanlagen des Windparks solche Windenergieanlagen, wie oben gemäß zumindest einer Ausführungsform beschrieben wurde.

Nachfolgend wird die Erfindung anhand von Ausführungsformen unter Bezugnahme auf die begleitenden Figuren beispielhaft beschrieben.
- Figur 1: zeigt schematisch eine Windenergieanlage in einer perspektivischen Ansicht.
- Figur 2: zeigt schematisch einen Windpark.
- Figur 3: zeigt schematisch ein Diagramm, das die Zusammenhänge der einzuspeisenden Blindleistung Q und der einzuspeisenden Wirkleistung P von der Windgeschwindigkeit gemäß einer Ausführungsform zeigt.
- Figur 4: zeigt schematisch den Aufbau einer Windenergieanlage mit mehreren Einspeiseeinheiten.

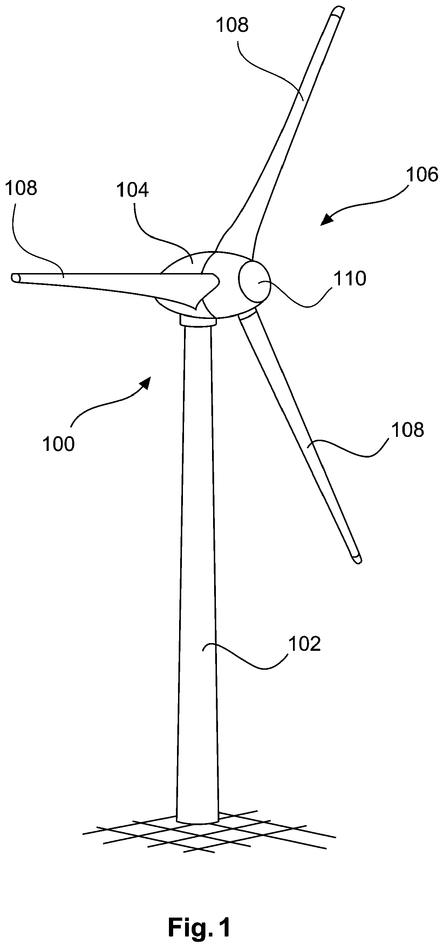

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

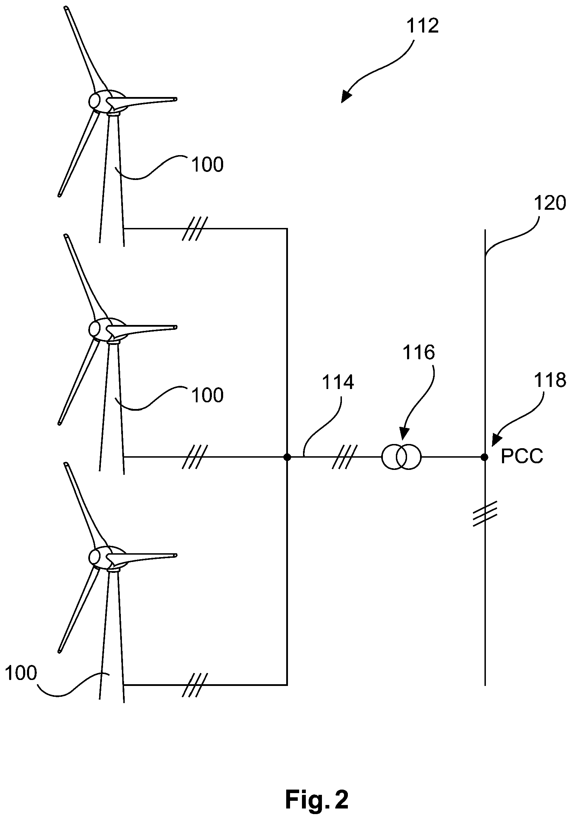

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

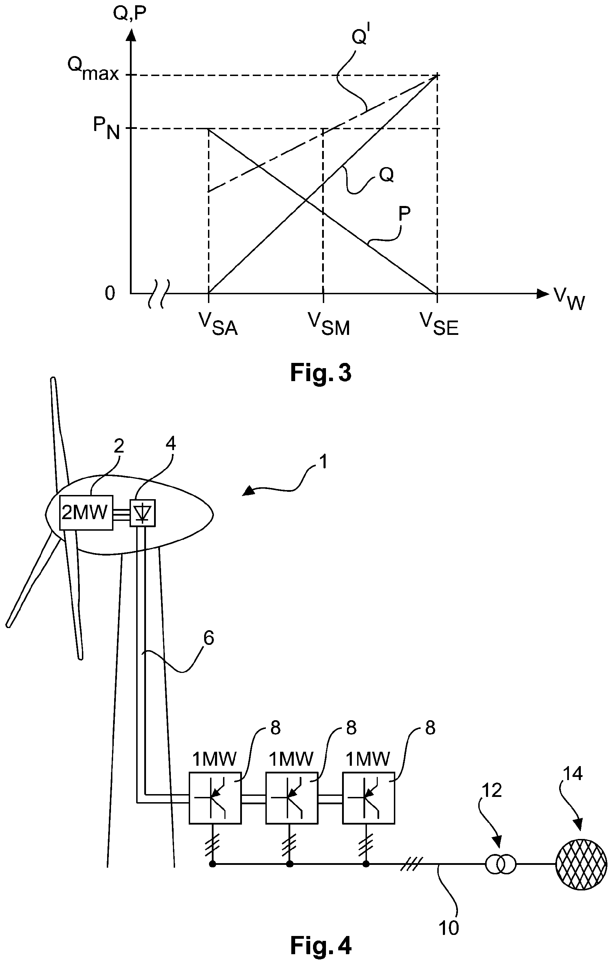

In dem Diagramm der Figur 3 ist die Windgeschwindigkeit V_{W} an der Abszisse abgetragen, wobei die Darstellung erst mit der Sturmanfangswindgeschwindigkeit V_{SA} beginnt. Bereiche schwächeren Windes sind hier für die nachfolgenden Erläuterungen nicht von Bedeutung.

An der Ordinate sind die Blindleistung Q und die Wirkleistung P abgetragen. Die Ordinate reicht von 0 bis zur Nennwirkleistung P_{N}. Insoweit ist die Skalierung für die Blindleistung Q und die Wirkleistung P gleich, wobei darunter zu verstehen ist, dass 1 Watt (W) einem 1 Volt Ampere reaktiv (VAr) entspricht.

Das Diagramm zeigt, dass die Wirkleistung P bei der Sturmanfangswindgeschwindigkeit V_{SA} Nennleistung P_{N} aufweist. Mit zunehmender Windgeschwindigkeit nimmt diese Wirkleistung bis zur Sturmendwindgeschwindigkeit V_{SE} kontinuierlich auf 0 ab.

Die Blindleistung Q nimmt hingegen von der Sturmanfangswindgeschwindigkeit V_{SA} kontinuierlich bis zur Sturmendwindgeschwindigkeit V_{SE} zu. In dem gezeigten Beispiel hat sie hier die maximal einspeisbare Blindleistung Qₘₐₓ erreicht. Vorzugsweise kann sie diesen Wert trotz steigender Windgeschwindigkeit beibehalten.

Als eine alternative Abhängigkeit der Blindleistung Q' von der Windgeschwindigkeit V_{W} ist strichpunktiert ein Verlauf eingezeichnet, bei dem die Blindleistung Q' bei der Sturmanfangswindgeschwindigkeit V_{SA} bereits größer als 0 ist. Bei diesem Verlauf ist auch erkennbar, dass bereits bei der mittleren Sturmwindgeschwindigkeit V_{SM} die Blindleistung Q' betragsmäßig dem Wert der Nennleistung P_{N} erreicht hat. In diesem Fall kann die Blindleistung Q' bspw. bei etwas kleineren Windgeschwindigkeiten als die Sturmanfangswindgeschwindigkeit V_{SA} einen konstanten Wert aufgewiesen haben, der möglicherweise aufgrund eines Netzzustandes eingestellt war.

Insoweit zeigt die Figur 3 für die Blindleistung Q bzw. Q' zwei Varianten, die Blindleistung in Abhängigkeit der Windgeschwindigkeit vorzugegeben. Die Bezeichnung Q' wurde nur verwendet, um eine Variante darzustellen. Ansonsten bezeichnet dieses Q' ebenso wie Q die einzuspeisende Blindleistung der jeweils erläuterten Ausführungsform.

Figur 4 zeigt schematisch eine Windenergieanlage 1, die einen Generator 2 aufweist. Dieser Generator 2 ist beispielhaft auf eine Nennleistung von 2MW ausgelegt. Die gezeigte Ausführungsform weist dabei einen Gleichrichter 4 auf, der sämtliche Leistung des Generators 2 gleichrichtet und über die Stromschiene 6 zu den Schaltschränken bzw. Einspeiseeinheiten 8 führt.

Alle der Einspeiseeinheiten 8 sind somit mit derselben Stromschiene 6 verbunden und jede dieser Einspeiseeinheiten 8 erzeugt einen dreiphasigen Wechselstrom, der auf die Ausgangsleitung 10 gespeist wird. Von der Ausgangsleitung 10 erfolgt dann schließlich die Einspeisung über einen Transformator 12 in das schematisch dargestellte Versorgungsnetz 14.

Jede Einspeiseeinheit bzw. jeder Schaltschrank 8 ist für das Einspeisen eines dreiphasigen Stroms ausgelegt, der dem Strom entspräche, der sich einstellt, wenn eine reine Wirkleistung von 1MW eingespeist werden würde. Von solchen 1MW-Schaltschränken sind drei Stück vorgesehen, die somit zum reinen Einspeisen von Wirkleistung für den 2MW-Generator 2 überdimensioniert sind. Mit diesen Schaltschränken 8 ist es möglich, die volle Wirkleistung von 2MW einzuspeisen und außerdem zusätzlich noch Blindleistung einzuspeisen. Außerdem ist es hiermit möglich, eine Blindleistung Q von mehr als 2 MVAr einzuspeisen, wenn nur die eingespeiste Wirkleistung entsprechend klein ist. Theoretisch kann bis zu drei MVAr mit diesen drei Schaltschränken 8 eingespeist werden, wenn keine Wirkleistung eingespeist wird.

## Patentansprüche

1. Verfahren zum Einspeisen elektrischer Energie in ein elektrisches Versorgungsnetz (14), mittels einer Windenergieanlage (1) oder eines Windparks (112), wobei
- die Windenergieanlage (1) bzw. der Windpark (112) kinetische Energie aus Wind mit einer veränderlichen Windgeschwindigkeit in elektrische Energie umwandeln,
- die Windenergieanlage (1) bzw. der Windpark (112) zum Einspeisen von Wirkleistung (P) und Blindleistung (Q) vorbereitet sind, wobei
- die einzuspeisende Blindleistung (Q) in Abhängigkeit der Windgeschwindigkeit (V_{W}) eingestellt wird
**dadurch gekennzeichnet, dass**
die Blindleistung (Q) erhöht wird, wenn die Windgeschwindigkeit (V_{W}) über eine Sturmanfangswindgeschwindigkeit (V_{SA}) steigt, bei der die Windenergieanlage (1) bzw. der Windpark (112) zu ihrem bzw. seinem Schutz abgeregelt wird.

2. Verfahren nach Anspruch 1,
**dadurch gekennzeichnet, dass**
oberhalb einer bzw. der Sturmanfangswindgeschwindigkeit (V_{SA})
- die Blindleistung (Q) mit weiter steigender Windgeschwindigkeit (V_{W}) weiter erhöht wird und/oder
- die Blindleistung (Q) mit fallender Windgeschwindigkeit (V_{W}) verringert wird.

3. Verfahren nach Anspruch 1 oder 2,
**dadurch gekennzeichnet, dass**
oberhalb einer bzw. der Sturmanfangswindgeschwindigkeit (V_{SA})
- die Blindleistung (Q) mit zunehmender Windgeschwindigkeit (V_{W}) kontinuierlich erhöht wird, bis die Windgeschwindigkeit (V_{W}) eine Sturmendwindgeschwindigkeit (V_{SA}) erreicht hat, bei der die Windenergieanlage (1) bzw. der Windpark (112) keine Wirkleistung (P) mehr ins Versorgungsnetz (18) einspeist, und/oder
- die Blindleistung (Q) mit abfallender Windgeschwindigkeit (V_{W}) unterhalb der Sturmendwindgeschwindigkeit (V_{SE}) kontinuierlich verringert wird, bis die Windgeschwindigkeit (V_{W}) eine bzw. die Sturmanfangswindgeschwindigkeit erreicht (V_{SA}) hat.

4. Verfahren nach einem der vorstehenden Ansprüche,
**dadurch gekennzeichnet dass**
- die Windenergieanlage (1) bzw. der Windpark (112) zum Einspeisen einer Nennwirkleistung (P_{N}) ausgelegt ist und
- bei Windgeschwindigkeiten (V_{W}) oberhalb der Sturmanfangswindgeschwindigkeit (V_{SA}), insbesondere oberhalb einer mittleren Sturmwindgeschwindigkeit (V_{SM}) zwischen der Sturmanfangswindgeschwindigkeit (V_{SA}) und der Sturmendwindgeschwindigkeit (V_{SE}), die eingespeiste Blindleistung (Q) dem Betrage nach höher als die Nennwirkleistung (P_{N}) ist.

5. Verfahren nach einem der vorstehenden Ansprüche,
**dadurch gekennzeichnet dass**
- zwischen einer bzw. der Sturmanfangswindgeschwindigkeit (V_{SA}) und einer bzw. der Sturmendwindgeschwindigkeit (V_{SE})
- die Blindleistung (Q) über eine Blindleistungsfunktion eingestellt wird, die einen Zusammenhang zwischen der Blindleistung (Q) und der Windgeschwindigkeit (V_{W}) definiert, wobei die Blindleistungsfunktion
- eine Polynom-Funktion erster oder zweiter Ordnung, und/oder
- eine Hysterese-Funktion ist.

6. Windenergieanlage (1) zum Einspeisen elektrischer Energie in ein elektrisches Versorgungsnetz (18), dazu vorbereitet, ein Verfahren nach einem der vorstehenden Ansprüche durchzuführen.

7. Windenergieanlage (1) nach Anspruch 6,
**dadurch gekennzeichnet, dass**
die Windenergieanlage (1)
- einen Generator (2) aufweist, der zum Erzeugen einer Generatornennleistung ausgelegt ist, und
- eine Einspeisevorrichtung aufweist, zum Durchführen des Einspeisens, wobei die Einspeisevorrichtung zum Einspeisen eines maximalen Einspeisestroms ausgelegt ist, der größer ist als ein Einspeisestrom zum Einspeisen der Generatornennleistung.

8. Windenergieanalage (1) nach Anspruch 6 oder 7,
**dadurch gekennzeichnet, dass**
die Einspeisevorrichtung mehrere Einspeiseeinheiten (8), insbesondere Leistungsschränke (8), aufweist und mehr Einspeiseeinheiten (8) bzw. Leistungsschränke (8) vorgesehen sind, als zum Einspeisen der von der Windenergieanlage (1) erzeugbaren Leistung, insbesondere ihrer Nennleistung erforderlich ist.

9. Windpark (112) zum Einspeisen elektrischer Energie in ein elektrisches Versorgungsnetz (18), wobei der Windpark (112) dazu vorbereitet ist, zum Einspeisen ein Verfahren nach einem der Ansprüche 1 bis 5 zu verwenden.

10. Windpark (112) nach Anspruch 9,
**dadurch gekennzeichnet, dass**
der Windpark (112) eine Zentralsteuereinheit zum Steuern des Windparks (112) aufweist, und Verfahrensschritte zum Durchführen des Verfahrens zum Einspeisen auf der Zentralsteuereinheit implementiert sind.

11. Windpark (112) nach Anspruch 9 oder 10,
**dadurch gekennzeichnet, dass**
der Windpark (112) zum Einspeisen eines größeren Stroms ausgelegt ist, als ein Strom zum Einspeisen einer maximalen Wirkleistung, auf die der Windpark (112) ausgelegt ist.

12. Windpark (112) nach einem der Ansprüche 9 bis 11,
**dadurch gekennzeichnet, dass**
er eine oder mehrere Windenergieanalgen (1) nach einem der Ansprüche 6 bis 8 umfasst, insbesondere, dass alle Windenergieanlagen (1) des Windparks Windenergieanalgen (1) gemäß einem der Ansprüche 6 bis 8 sind.

## Claims

1. Method for supplying electrical energy into an electrical supply network (14) by means of a wind power plant (1) or wind farm (112), wherein
- the wind power plant (1) or wind farm (112) converts kinetic energy from wind with variable wind velocity to electrical energy,
- the wind power plant (1) or wind farm (112) is prepared for supplying active power (P) and reactive power (Q), wherein
- the reactive power (Q) to be fed in is adjusted based on the wind velocity (VW
**characterized in that**
the reactive power (Q) is increased if the wind velocity (VW) exceeds a wind velocity at the beginning of a storm (VSA) where the wind power plant (1) or wind farm (112) is throttled for its own protection.

2. Method according to Claim 1,
**characterized in that**
- the reactive power (Q) is further increased with further increasing wind velocity (VW) and/or
- the reactive power (Q) is reduced with falling wind velocity (VW) if the wind velocity exceeds a or the wind velocity at the beginning of a storm (VSA).

3. Method according to Claim 1 or 2,
**characterized in that**
- the reactive power (Q) is continuously increased with increasing wind velocity (VW) until the wind velocity (VW) has reached a wind velocity at the end of a storm (VSA), at which the wind power plant (1) or wind farm (112) no longer feeds active power (P) into the supply network (18), and/or
- the reactive power (Q) is continuously reduced with falling wind velocity (VW) that is below the wind velocity at the end of a storm (VSE) until the wind velocity (VW) has reached a or the wind velocity at the beginning of a storm (VSA)
if the wind velocity exceeds a or the wind velocity at the beginning of a storm (VSA).

4. Method according to one of the above claims,
**characterized in that**
- the wind power plant (1) or wind farm (112) is designed for supplying a nominal active power (PN) and
- that at wind velocities (VW) above the wind velocity at the beginning of a storm (VSA), in particular above a mean storm wind velocity (VSM) between the wind velocity at the beginning of a storm (VSA) and the wind velocity at the end of a storm (VSE), the fed-in reactive power (Q) is higher in terms of its value than the nominal active power (PN).

5. Method according to one of the above claims,
**characterized in that**
- between a or the wind velocity at the beginning of a storm (VSA) and a or the wind velocity at the end of a storm (VSE)
- the reactive power (Q) is set by a reactive power function that defines a connection between the reactive power (Q) and the wind velocity (VW), wherein the reactive power function
- is a first or second-order polynomial function, and/or
- a hysteresis function.

6. Wind power installation (1) for supplying electrical energy into an electrical supply network (18), prepared for performing a method according to one of the above claims.

7. Wind power installation (1) according to Claim 6,
**characterized in that**
the wind power plant (1)
- features a generator (2) that is designed for generating a generator nominal power and
- a feed-in device for supplying, wherein said feed-in device is designed for supplying a maximum feed-in current that is greater than a feed-in current for supplying the generator nominal power.

8. Wind power installation (1) according to Claim 6 or 7,
**characterized in that**
the feed-in device features several feed-in units (8), in particular power cabinets (8), and that more feed-in units (8) or power cabinets (8) are provided than necessary for supplying the power that can be generated by the wind power plant (1), in particular its nominal power.

9. Wind farm (112) for supplying electrical energy into a supply network (18), wherein the wind farm (112) is prepared for using a method according to one of the Claims 1 to 5 for supplying purposes.

10. Wind farm (112) according to Claim 9,
**characterized in that**
the wind farm (112) features a central control unit for controlling the wind farm (112), and method steps for performing the supplying method are implemented on said central control unit.

11. Wind farm (112) according to Claim 9 or 10,
**characterized in that**
the wind farm (112) is designed for supplying a larger current than the current required for supplying a maximum active power for which the wind farm (112) is designed.

12. Wind farm (112) according to one of the Claims 9 to 11,
**characterized in that**
it comprises one or more wind power plants (1) according to one of the Claims 6 to 8, in particular, that all wind power plants (1) of the wind farm are wind power plants (1) according to one of the Claims 6 to 8.

## Revendications

1. Procédé servant à injecter une énergie électrique dans un réseau d'alimentation (14) électrique au moyen d'une éolienne (1) ou d'un parc éolien (112), dans lequel
- l'éolienne (1) ou le parc éolien (112) transforme une énergie cinétique issue du vent présentant une vitesse de vent variable en une énergie électrique,
- l'éolienne (1) ou le parc éolien (112) sont fournis pour injecter une puissance active (P) et une puissance réactive (Q), dans lequel
- la puissance réactive (Q) à injecter est réglée en fonction de la vitesse du vent (V_{W}),
**caractérisé en ce que**
la puissance réactive (Q) est augmentée quand la vitesse du vent (V_{W}) dépasse une vitesse de vent de début de tempête (V_{SA}), pour laquelle l'éolienne (1) ou le parc éolien (112) est régulée ou régulé pour se voir affecter une limite aux fins de sa protection.

2. Procédé selon la revendication 1,
**caractérisé en ce que**
au-dessus d'une ou de la vitesse de vent de début de tempête (V_{SA}),
- la puissance réactive (Q) continue à être augmentée au fur et à mesure que la vitesse du vent (V_{W}) continue à augmenter, et/ou
- la puissance réactive (Q) est réduite au fur et à mesure que la vitesse du vent (V_{W}) baisse.

3. Procédé selon la revendication 1 ou 2, **caractérisé en ce que**
au-dessus d'une ou de la vitesse de vent de début de tempête (V_{SA})
- la puissance réactive (Q) est augmentée en continu au fur et à mesure que la vitesse du vent (V_{W}) augmente, jusqu'à ce que la vitesse du vent (V_{W}) ait atteint une vitesse de vent de fin de tempête (V_{SE}), pour laquelle l'éolienne (1) ou le parc éolien (112) n'injecte plus aucune puissance active (P) dans le réseau d'alimentation (18), et/ou
- la puissance réactive (Q) est réduite en continu au fur et à mesure que la vitesse du vent (V_{W}) baisse sous la vitesse de vent de fin de tempête (V_{SE}) jusqu'à ce que la vitesse du vent (V_{W}) ait atteint une ou la vitesse de vent de début de tempête (V_{SA}).

4. Procédé selon l'une quelconque des revendications précédentes,
**caractérisé en ce que**
- l'éolienne (1) ou le parc éolien (112) est configurée ou configuré pour injecter une puissance active nominale (P_{N}), et
- dans le cas de vitesses du vent (V_{W}) au-dessus de la vitesse de vent de début de tempête (V_{SA}), en particulier au-dessus d'une vitesse de vent de tempête moyenne (V_{SM}) entre la vitesse de vent de début de tempête (V_{SA}) et la vitesse de vent de fin de tempête (V_{SE}), la puissance réactive (Q) injectée est du point de vue de la valeur supérieure à la puissance active nominale (P_{N}).

5. Procédé selon l'une quelconque des revendications précédentes,
**caractérisé en ce que**
- entre une ou la vitesse de vent de début de tempête (V_{SA}) et une ou la vitesse de vent de fin de tempête (V_{SE}),
- la puissance réactive (Q) est réglée par l'intermédiaire d'une fonction de puissance réactive, qui définit un rapport entre la puissance réactive (Q) et la vitesse du vent (V_{W}), dans lequel la fonction de puissance réactive est
- une fonction polynomiale de premier ou deuxième rang, et/ou
- une fonction d'hystérèse.

6. Eolienne (1) servant à injecter une énergie électrique dans un réseau d'alimentation (18) électrique, fournie pour mettre en oeuvre un procédé selon l'une quelconque des revendications précédentes.

7. Eolienne (1) selon la revendication 6, **caractérisée en ce que**
l'éolienne (1)
- présente un générateur (2), qui est configuré pour produire une puissance nominale de générateur, et
- présente un dispositif d'injection servant à mettre en oeuvre l'injection, dans lequel le dispositif d'injection est configuré pour injecter un courant d'injection maximal, qui est plus grand qu'un courant d'injection servant à injecter la puissance nominale de générateur.

8. Eolienne (1) selon la revendication 6 ou 7,
**caractérisée en ce que**
le dispositif d'injection présente plusieurs unités d'injection (8), en particulier des armoires de puissance (8), et un nombre plus important d'unités d'injection (8) ou d'armoires de puissance (8) est prévu plus que ce qui est requis pour injecter la puissance pouvant être produite par l'éolienne (1), en particulier sa puissance nominale.

9. Parc éolien (112) servant à injecter une énergie électrique dans un réseau d'alimentation (18) électrique, dans lequel le parc éolien (112) est fourni pour utiliser un procédé d'injection selon l'une quelconque des revendications 1 à 5.

10. Parc éolien (112) selon la revendication 9,
**caractérisé en ce que**
le parc éolien (112) présente une unité de commande centrale servant à commander le parc éolien (112), et des étapes de procédé servant à mettre en oeuvre le procédé d'injection sont implémentées sur l'unité de commande centrale.

11. Parc éolien (112) selon la revendication 9 ou 10,
**caractérisé en ce que**
le parc éolien (112) est configuré pour injecter un courant plus important qu'un courant servant à injecter une puissance active maximale, sur laquelle le parc éolien (112) est configuré.

12. Parc éolien (112) selon l'une quelconque des revendications 9 à 11,
**caractérisé en ce que**
il comprend une ou plusieurs éoliennes (1) selon l'une quelconque des revendications 6 à 8, en particulier que toutes les éoliennes (1) du parc éolien sont des éoliennes (1) selon l'une quelconque des revendications 6 à 8.
